# EUROPÄISCHE PATENTANMELDUNG

(11) **EP 1 046 597 A1**
(43) Veröffentlichungstag der Anmeldung: **25.10.2000**
(21) Anmeldenummer: 00108443.3
(22) Anmeldetag: 18.04.2000
(51) Int. Cl.: B65G 7/12, E04G 21/16

(54) **Hebevorrichtung für Formteile, insbesondere Betonplatten**

(30) Priorität: 19.04.1999 DE 19917559; 06.10.1999 DE 19948244
(71) Anmelder: Geist, Eberhard, 72622 Nürtingen (DE)
(72) Erfinder: Geist, Eberhard, 72622 Nürtingen (DE)
(74) Vertreter: Nockher, Gerhard, Dipl.-Ing.

(57) **Zusammenfassung**

Bei einer Hebevorrichtung für Formteile mit zueinander parallelen Kanten an einander gegenüberliegenden Seiten, insbesondere Betonplatten, mit an den Kanten zur Anlage bringbaren Greifbacken, die mit einem Grifforgan für den Angriff mindestens einer Hand verbunden sind, sollen keine bei Benutzung zueinander gelenkig beweglichen Teile erforderlich sein.

Dies wird dadurch erreicht, daß die Greifbacken an einer Grundplatte aus federndem Werkstoff vorgesehen und als in Gebrauchsstellung nach unten weisende Abwinkelungen ausgebildet sind, und daß das Grifforgan mit dem Mittelteil der Grundplatte verbunden ist. Dabei kann auch die Möglichkeit geschaffen werden, die Verbindung zwischen den Greifbacken und dem Grifforgan so auszugestalten, daß die Hebevorrichtung von einer Person im Stehen benutzt werden kann.

## Beschreibung

Die Erfindung bezieht sich auf eine Hebevorrichtung für Formteile mit zueinander parallelen Kanten an einander gegenüberliegenden Seiten, insbesondere Betonplatten, mit an den Kanten zur Anlage bringbaren Greifbacken, die mit einem Grifforgan für den Angriff mindestens einer Hand verbunden sind.

Bei bekannten Hebevorrichtungen dieser Art (DE G 91 09 337.6 U1, DE GM 76 05 253, DE GM 75 37 285) sind die beiden Greifbacken an gegeneinander um eine im Gebrauchszustand horizontale Achse schwenkbaren Bauteilen der Hebevorrichtung vorgesehen. Dies bedingt in jedem Fall das Vorhandensein mindestens eines entsprechenden Gelenkes, das bei dem rauhen Betrieb auf Baustellen leicht beschädigt werden und ausfallen kann. Außerdem ist bei den bekannten Hebevorrichtungen das Grifforgan unmittelbar über dem/den Gelenk(en) angeordnet, so daß die bekannten Hebevorrichtungen nur in gebückter oder kniender Haltung der Bedienungsperson benutzt werden können.

Es ist Aufgabe der Erfindung, eine Hebevorrichtung zu schaffen, bei der keine bei Benutzung zueinander gelenkig beweglichen Bauteile erforderlich sind. Dabei soll auch eine Möglichkeit geschaffen werden, die Verbindung zwischen den Greifbacken und dem Grifforgan so auszugestalten, daß die Hebevorrichtung von einer Bedienungsperson im Stehen benutzt werden kann.

Diese Aufgabe ist bei einer Hebevorrichtung der eingangs genannten Art dadurch gelöst, daß die Greifbacken an einer Grundplatte aus federndem Werkstoff vorgesehen und als in Gebrauchsstellung nach unten weisende Abwinkelungen ausgebildet sind, und daß das Grifforgan mit dem Mittelteil der Grundplatte verbunden ist.

Beim Aufdrücken der Hebevorrichtung federn die Greifbacken etwas auseinander und rasten an den Kanten an den gegenüberliegenden Seiten des Formteiles ein. Beim Anheben der Hebevorrichtung ist der Formteil dann zwischen den federnd anliegenden Greifbacken sicher gehalten. Nach Absetzen des Formteiles an der gewünschten Stelle wird durch Neigen der Hebevorrichtung diese von dem Formteil gelöst.

Die Hebevorrichtung kann dadurch weiter ausgestaltet sein, daß die Abwinkelungen an Greifplatten ausgebildet sind, die in Gebrauchsstellung auf der Unterseite der Grundplatte mit verschiedenen Abständen von dem Mittelteil der Grundplatte befestigbar sind. Dies hat den Vorteil, daß die Greifplatten mit den Greifbacken bei Bedarf, z.B. Verschleiß, ausgetauscht werden können, ohne die Grundplatte aus federndem Werkstoff mit austauschen zu müssen.

Diese Ausführung der Hebevorrichtung kann zweckmäßigerweise derart ausgeführt sein, daß lösbare Verschraubungen vorgesehen sind, mittels derer die Greifplatten durch von dem Mittelteil der Grundplatte verschieden beabstandete Bohrungen befestigbar sind. Dadurch kann der Abstand der Greifbacken durch Lösen und erneutes Anziehen der Verschraubungen an verschiedene Abstände der Kanten an den gegenüberliegenden Seiten der Formteile, beispielsweise also verschiedene Abmessungen von Betonplatten, angepaßt werden.

Vorteilhaft ist auch eine derartige Ausgestaltung der Hebevorrichtung, daß der Mittelteil der Grundplatte an einer die Lage des Mittelteiles festlegenden Tragplatte befestigt ist, und daß das Grifforgan mit der Tragplatte verbunden ist. Dadurch kann das Austauschen der Grundplatte vereinfacht und eine starre Verbindung derselben, z.B. durch Schweißung, mit dem Grifforgan vermieden werden.

Um einer Bedienungsperson eine Benutzung der Hebevorrichtung auch im Stehen zu ermöglichen, kann die Verbindung des Grifforgans mit der Grundplatte eine sich etwa senkrecht zu der Grundplatte erstreckende Stange enthalten.

Das Grifforgan kann als sich etwa parallel zu der Grundplatte erstreckende Tragstange mit Griffen an beiden Enden ausgebildet sein.

Bei dieser Ausgestaltung kann an der Tragstange mit Abstand von letzterer etwa mittig ein weiterer Griff befestigt sein. Dies erleichtert die Handhabung der Hebevorrichtung mit einer Hand.

Zur Anpassung der Hebevorrichtung an verschiedene Arbeitsbedingungen und verschiedene Körpergrößen einer Bedienungsperson kann es vorteilhaft sein, daß die Stange aus zwei teleskopartig zueinander verschiebbaren und zueinander festlegbaren Teilen besteht, deren einer mit der Tragstange und deren anderer mit der Grundplatte verbunden ist, und daß in den Teilen Bohrungen für das Einbringen von Befestigungsmitteln zum Festlegen der Teile zueinander bei verschiedenen Gesamtlängen der Stange vorgesehen sind. Dabei können die Teile der Stange als Vierkantrohre ausgebildet sein.

In der Zeichnung ist ein Ausführungsbeispiel einer Hebevorrichtung nach der Erfindung dargestellt, und zwar zeigt
- Fig. 1: die Hebevorrichtung in Seitenansicht beim Aufsetzen auf eine Betonplatte,
- Fig. 2: die Hebevorrichtung in Seitenansicht in auf eine Betonplatte aufgesetzter Stellung,
- Fig. 3: die Hebevorrichtung in Seitenansicht beim Abnehmen von einer Betonplatte,

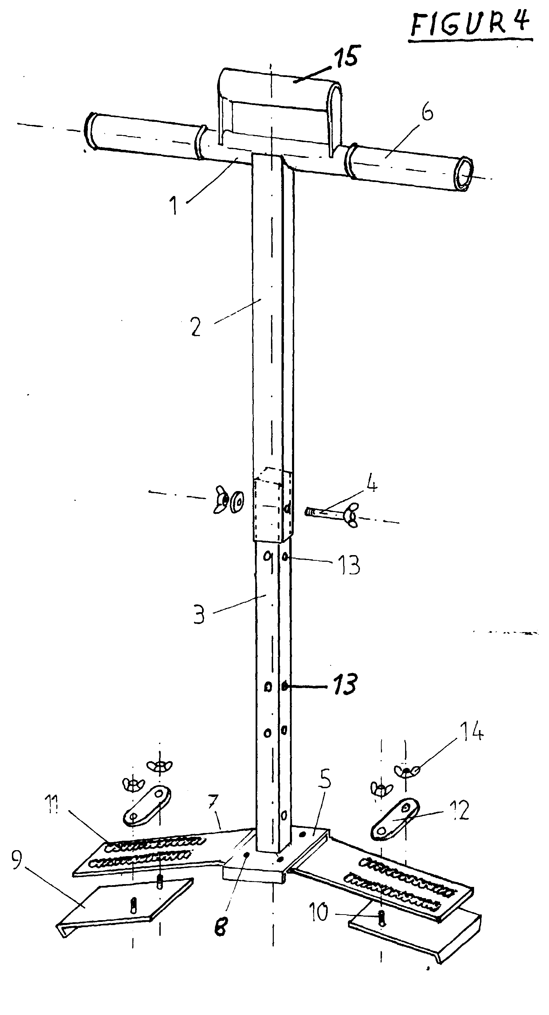

- Fig. 4: die Hebevorrichtung in perspektivischer Darstellung.

Eine Grundplatte 7 aus federndem Werkstoff, z.B. Federstahl, ist beiderseits des Mittelteiles um etwa 15° nach unten abgewinkelt. Auf der Unterseite dieser abgewinkelten Bereiche der Grundplatte 7 sind Greifplatten 9 mittels Verschraubungen 10,12,14 befestigt, die Bohrungen 11 durchragen, die in Reihen in den abgewinkelten Bereichen der Grundplatte 7 vorgesehen sind. An den äußeren Enden der Greifplatten 9 sind nach unten weisende Abwinkelungen vorgesehen, die Greifbacken bilden. Der Abstand der Greifbacken voneinander ist dadurch veränderbar, daß die Verschraubungen 10,12,14 in von dem Mittelteil der Grundplatte 7 verschieden beabstandete Bohrungen 11 einführbar sind. Die Verschraubungen bestehen aus in die Greifplatten 9 eingeschweißten Schrauben 10, Unterlegplatten 12 und Flügelmuttern 14.

Der Mittelteil der Grundplatte 7 ist an einer Tragplatte 5 mit nach unten weisenden Rändern mittels ― in der Zeichnung nicht dargestellter ― Schrauben, die in Bohrungen 8 sitzen, befestigt: Auf der Oberseite der Tragplatte 5 ist eine aus Teilen 2,3 bestehende Stange mit ihrem unteren Ende senkrecht nach oben weisend befestigt. Am oberen Ende der Stange ist eine Tragstange 1 mit Griffen 6 an ihren beiden Enden angebracht. Oberhalb des mittleren Bereichs der Tragstange 1 ist mit Abstand ein weiterer Griff 15 befestigt. Die Griffe 6,15 weisen Ummantelungen aus Gummi oder dergleichen auf.

Die beiden Teile 2,3 der Stange sind als Vierkantrohre mit so weit verschiedenen Abmessungen ausgebildet, daß die Teile 2,3 ohne großes Spiel gegeneinander verschiebbar sind. Die Festlegung der Teile 2,3 zueinander erfolgt durch Befestigungsmittel 4. Um verschiedene Gesamtlängen der Stange einstellen zu können, ist in dem oberen Teil 2 eine durchgehende Bohrung und sind in dem unteren Teil 3 von der Tragplatte 5 verschieden beabstandete Bohrungen 13 zum Einführen der Befestigungsmittel 4 vorgesehen. In dem unteren Teil 3 sind rechtwinkelig zu den Bohrungen 13 verlaufend weitere Bohrungen vorgesehen, die es ermöglichen, die Befestigungsmittel einzubringen, wenn der obere Teil 2 um 90° verdreht über den unteren Teil 3 geschoben ist.

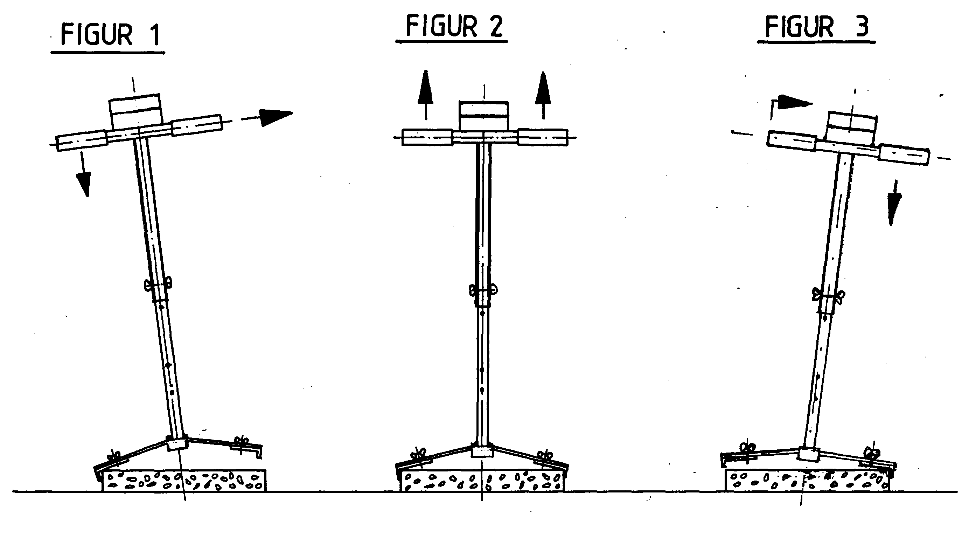

Wie die Pfeile in Fig. 1 zeigen, wird die eine Greifbacke an der einen Kante der Betonplatte durch Drücken nach unten angesetzt und die Grundplatte so weit elastisch verformt, daß die zweite Greifbacke an der anderen Kante der Betonplatte einrastet. Die Pfeile in Fig. 2 zeigen, daß die aufgenommene Betonplatte angehoben werden kann. Wie die Pfeile in Fig. 3 zeigen, wird die eine Greifbacke von der einen Kante der Betonplatte abgezogen, wonach die Hebevorrichtung entfernt werden kann.

## Patentansprüche

1. Hebevorrichtung für Formteile mit zueinander parallelen Kanten an einander gegenüberliegenden Seiten, insbesondere Betonplatten, mit an den Kanten zur Anlage bringbaren Greifbacken, die mit einem Grifforgan für den Angriff mindestens einer Hand verbunden sind, dadurch gekennzeichnet, daß die Greifbacken an einer Grundplatte (7) aus federndem Werkstoff vorgesehen und als in Gebrauchsstellung nach unten weisende Abwinkelungen ausgebildet sind, und daß das Grifforgan mit dem Mittelteil der Grundplatte (7) verbunden ist.

2. Hebevorrichtung nach Anspruch 1, dadurch gekennzeichnet, daß die Abwinkelungen an Greifplatten (9) ausgebildet sind, die in Gebrauchsstellung auf der Unterseite der Grundplatte (7) mit verschiedenen Abständen von dem Mittelteil der Grundplatte (7) befestigbar sind.

3. Hebevorrichtung nach Anspruch 2, dadurch gekennzeichnet, daß lösbare Verschraubungen (10,12,14) vorgesehen sind, mittels derer die Greifplatten (9) durch von dem Mittelteil der Grundplatte (7) verschieden beabstandete Bohrungen (11) befestigbar sind.

4. Hebevorrichtung nach einem der Ansprüche 1 bis 3, dadurch gekennzeichnet, daß der Mittelteil der Grundplatte (7) an einer die Lage des Mittelteiles festlegenden Tragplatte (5) befestigt ist, und daß das Grifforgan mit der Tragplatte (5) verbunden ist.

5. Hebevorrichtung nach einem der Ansprüche 1 bis 4, dadurch gekennzeichnet, daß die Verbindung des Grifforgans mit der Grundplatte (7) eine sich etwa senkrecht zu der Grundplatte (7) erstreckende Stange enthält.

6. Hebevorrichtung nach einem der Ansprüche 1 bis 5, dadurch gekennzeichnet daß das Grifforgan als sich etwa parallel zu der Grundplatte (7) erstreckende Tragstange (1) mit Griffen (6) an beiden Enden ausgebildet ist.

7. Hebevorrichtung nach Anspruch 6, dadurch gekennzeichnet, daß an der Tragstange (1) mit Abstand von letzterer etwa mittig ein weiterer Griff (15) befestigt ist.

8. Hebevorrichtung nach einem der Ansprüche 5 bis 7, dadurch gekennzeichnet, daß die Stange aus zwei teleskopartig zueinander verschiebbaren und zueinander festlegbaren Teilen (2,3) besteht, deren einer (2) mit der Tragstange (1) und deren anderer (3) mit der Grundplatte (7) verbunden ist, und daß in den Teilen (2,3) Bohrungen (13) für das Einbringen von Befestigungsmitteln (4) zum Festlegen der Teile (2,3) zueinander bei verschiedenen Gesamtlängen der Stange vorgesehen sind.

9. Hebevorrichtung nach Anspruch 8, dadurch gekennzeichnet, daß die Teile (2,3) als Vierkantrohre ausgebildet sind.
